# EUROPEAN PATENT APPLICATION

(11) **EP 2 367 126 A2**
(43) Date of publication of application: **21.09.2011**
(21) Application number: 09827714.8
(22) Date of filing: 18.11.2009
(51) Int. Cl.: G06F 19/00

(54) **METHOD AND APPARATUS FOR INFORMATION RECOVERY USING SNAPSHOT DATABASE**

(30) Priority: 18.11.2008 KR 20080114844
(71) Applicant: Neople, Inc., Gangnam-gu Seoul 135-873 (KR)
(72) Inventor: CHO, Sung Hwan, Seoul 135-873 (KR)
(74) Representative: Algemeen Octrooi- en Merkenbureau
(86) International application number: PCT/KR2009/006782
(87) International publication number: WO 2010/058949

(57) **Abstract**

The present invention discloses a method of recovering information using a snapshot database, the method including collecting first user log information about a user of at least one user terminal, extracting valid information from the first user log information, storing the extracted valid information in a type of snapshot database, based on period information, receiving recovery request information for the valid information from the user terminal, comparing and analyzing second user log information and the valid information at a point in time when the recovery request information is received, based on the recovery request information, and recovering the second user log information using the valid information, based on a result of the analysis.

## Description

### Technical Field

The present invention relates to a method and apparatus for recovering information using a snapshot database, and more particularly, to a method and apparatus for recovering information which may extract log information, may store the extracted log information using a snapshot database scheme, and may rapidly recover log information determined to be hacked using the extracted and stored log information when a recovery request with respect to the log information is received from a user.

### Background Art

Today, in accordance with development of information communication and Internet technologies, information may be easily and rapidly shared among users who desire to share the information.

However, there are frequent cases of hacking as malicious acts, and the like which illegally access computers of other people, whose network security is found to be vulnerable during information sharing, and steal information to make unfair profits or to paralyze the computer network.

Although the people, affected by the hacking and the like, may recover the hacked information through the network or a management server to which their computers are connected, there is an inconvenience in that a recovery process may be considerably complex and the recovery may take an inordinately long time.

Particularly, in a case of a conventional online game, a method for managing item information for each game user has been used to recover items of a game user which may be missing due to a network failure, for example, a game server crashing down and the like, or to trace and recover items stolen by various types of hacking.

That is, information regarding items that each user owns from a time before a predetermined time period until the present time, and information about records for each of the item may be stored in a database server connected to a game server. Thereby, the recovery of the missing or stolen items may be performed based on the item information of a corresponding user at a point in time of the recovery. Also, the tracing of the items stolen by the various types of hacking may be performed by searching for the information about the records of the items.

However, the method of managing the item information in the conventional online game has various problems, for example, an enlarged capacity for storing information regarding the items that each user owns from a time before a predetermined time period until the present time, and information about records of each of the items, accompanying occurrence of overload of a database server, difficulties in tracing hacked items, difficulties in tracing and recovering cloned items, and the like.

### Disclosure of Invention

### Technical Goals

The present invention has been configured to resolve the aforementioned problems of the conventional technology, and provides a method and apparatus that may recover information damaged by hacking, and the like.

An aspect of the present invention provides a method and apparatus that may improve information recovery rates by simplifying a process of recovering information and by reducing a processing time.

Another aspect of the present invention provides a method that may considerably reduce recovery tasks according to an amount of throughput of information recovery which may be increased by an automated process of recovering information, from a point of view of an information management server.

Still another aspect of the present invention provides a method that may resolve information loss caused by hacking, and may improve an image and reliability with respect to a server or a program that may provide information, from a point of view of a customer.

### Technical solutions

To achieve the goals described above, and to resolve the aforementioned problems of the conventional technology, there is provided a method of recovering information using a snapshot database according to an aspect of the present invention, the method including collecting first user log information about a user of at least one user terminal, extracting valid information from the first user log information, storing the valid information in a type of snapshot database, based on period information, receiving recovery request information for the valid information from the user terminal, comparing and analyzing second user log information and the valid information at a point in time when the recovery request information is received, based on the recovery request information, and recovering the second user log information using the valid information, based on a result of the analysis.

The recovering may be executed when the user terminal is determined to be hacked since the second user log information may be different from the valid information.

According to another aspect of the present invention, there is provided a method of recovering information using a snapshot database, the method including transmitting recovery request information for valid information to a user log management server, and receiving second user log information recovered using the valid information, stored on the user log management server in a type of snapshot database before the recovery request information is transmitted, wherein the user log management server may compare and analyze second user log information and the valid information at a point in time when the recovery request information is received, and may recover the second user log information using the valid information based on a result of the analysis.

According to still another aspect of the present invention, there is provided an apparatus for recovering information using a snapshot database, the apparatus including an information collector to collect first user log information about a user of at least one user terminal, an information extraction unit to extract valid information from the first user log information, an information receiver to receive recovery request information for the valid information from the user terminal, an information analysis unit to compare and analyze second user log information and the valid information at a point in time when the recovery request information is received, based on the recovery request information, and an information recovery unit to recover the second user log information using the valid information, based on a result of the analysis.

According to a further aspect of the present invention, there is provided an apparatus for recovering information using a snapshot database, the apparatus including an information transmitter to transmit recovery request information for valid information to a user log management server, and an information recovery unit to receive second user log information recovered using the valid information stored on the user log management server in a type of snapshot database before the recovery request information is transmitted, according to determination by the user log management server, wherein the user log management server may compare and analyze second user log information and the valid information at a point in time when the recovery request information is received, and may recover the second user log information using the valid information based on a result of the analysis.

### Effect of Invention

According to embodiments of the present invention, information damaged by hacking, and the like may be recovered.

According to embodiments of the present invention, information recovery rates may be improved by simplifying a process of recovering information and by reducing a processing time.

According to embodiments of the present invention, recovery tasks may be considerably reduced according to an amount of throughput of information recovery which may be increased by an automated process of recovering information, from a point of view of an information management server.

According to embodiments of the present invention, information loss caused by hacking may be resolved and an image and reliability with respect to a server or a program that may provide information may be improved, from a point of view of a customer.

### Brief Description of Drawings

FIG. 1 illustrates a configuration of a system for recovering information using a snapshot database according to embodiments of the present invention.
FIG. 2 illustrates a configuration of a user log management server of a system for recovering information using a snapshot database according to embodiments of the present invention.
FIG. 3 illustrates a configuration of a user terminal of a system for recovering information using a snapshot database according to embodiments of the present invention.
FIG. 4 is an example illustrating a process of recovering information according to embodiments of the present invention.
FIG. 5 is another example illustrating a process of recovering information according to embodiments of the present invention.
FIG. 6 is a flowchart illustrating a method of recovering information using a snapshot database according to embodiments of the present invention.
FIG. 7 is a flowchart illustrating another method of recovering information using a snapshot database according to embodiments of the present invention.

### Best Mode for Carrying Out the Invention

The present invention will now be described more fully with reference to the accompanying drawings, in which exemplary embodiments of the invention are shown. The invention, however, may not be construed as being limited to the embodiments set forth herein.

When it is determined that a detailed description is related to a related known function or configuration which may make the purpose of the present invention unnecessarily ambiguous in the description of the present invention, such detailed description will be omitted. Also, terminologies used herein are defined to appropriately describe the exemplary embodiments of the present invention and thus may be changed depending on a user, the intent of an operator, or a custom. Accordingly, the terminologies must be defined based on the following overall description of this specification.

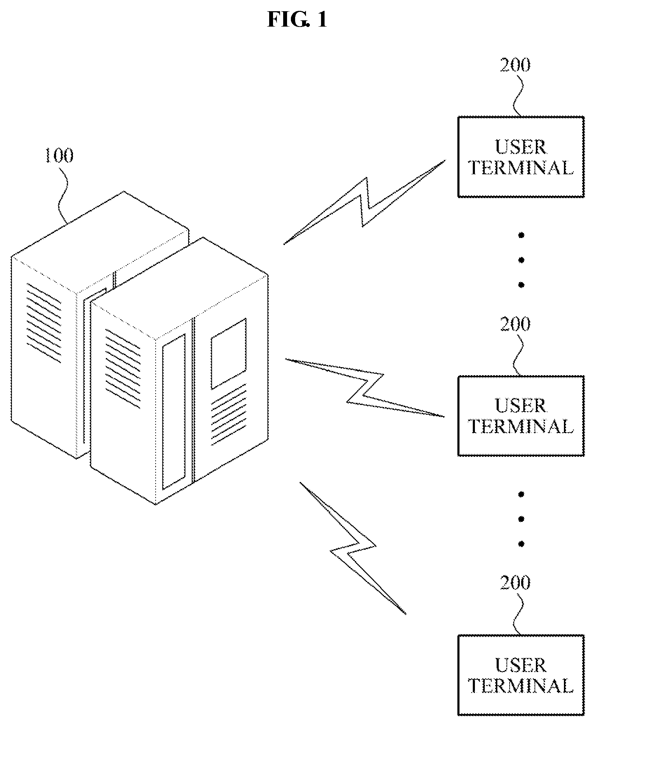

FIG. 1 illustrates a configuration of a system for recovering information using a snapshot database according to embodiments of the present invention.

An aspect of the present invention provides a system for automatically recovering information that may extract valid information from numerous pieces of user log information collected by a user log management server 100, and may store the extracted valid information in a type of snapshot database. When a signal for an information recovery request is received from a user terminal 200, the system may determine whether the user terminal 200 is hacked by comparing the valid information and user log information of the user terminal 200 at a point in time when the signal for the information recovery request is received, without a need for examination of all of the user log information.

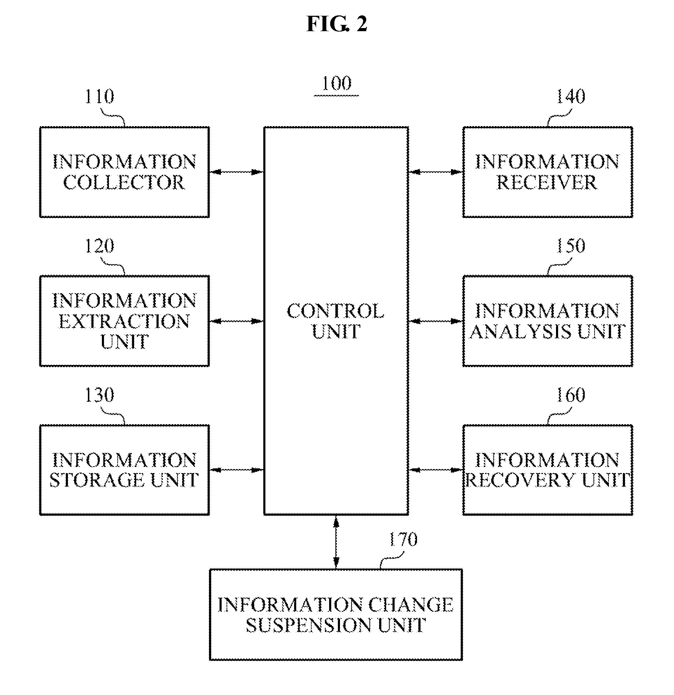

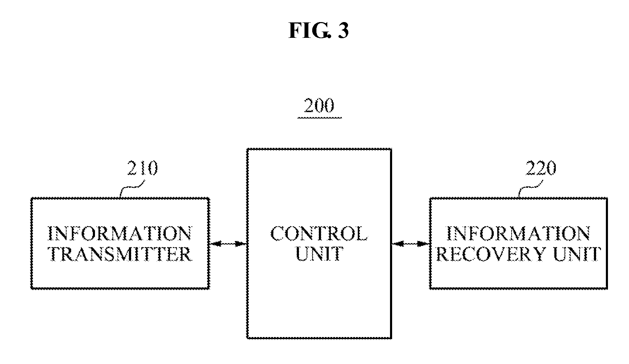

Accordingly, a method of recovering information using a snapshot database according to embodiments of the present invention will be described with reference to FIGS. 2 and 3, based on a flow of information and information processing of the user log management server 100 and the user terminal 200.

FIG. 2 illustrates a configuration of the user log management server 100 of the system for recovering information using a snapshot database, and FIG. 3 illustrates a configuration of the user terminal 200 of the system for recovering information using a snapshot database, according to embodiments of the present invention.

An information collector 110 of the user log management server 100 may collect first user log information about a user of at least one user terminal 200.

For example, when information associated with an online game is recovered by applying embodiments of the present invention, the first user log information may correspond to a great amount of information including all records of game play of a game user, which may be collected by the user log management server 100, in operation of the online game service.

Accordingly, when an information recovery request is received from a user, an administrator may manually determine whether the first user log information including the great amount of the information is hacked, and may extract related information to recover the information when the first user log information is determined to be hacked, and thereby a substantial amount of time may be consumed for the recovery.

However, the system according to embodiments of the present invention may extract valid information from the first user log information including the great amount of hacked information, may store the valid information in a type of a snapshot database, and then may simply and automatically recover information using the valid information when an information recovery request is received from the user, by the following process.

An information extraction unit 120 of the user log management server 100 may extract valid information from the first user log information.

In this instance, when the first user log information corresponds to information about character records in a game, the valid information may correspond to various categories of information such as a character name, inventory information, financial information, and the like, which may be recovered in the game by an administrator.

For example, when the present invention is applied to a method for recovering user log information of an online game, the inventory information may correspond to information including items, game currency, and the like that may be collected by an online game character in the course of game play, and the financial information may correspond to information about a flow of the items or the game currency, which may be generated when the online game character performs trading, selling, purchasing, and the like, in the course of game play.

Then, an information storage unit 130 of the user log management server 100 may store the valid information in a type of snapshot database, based on period information.

As described above, the user log management server 100 may extract the valid information from the first user log information, and may store the valid information in the type of snapshot database. Accordingly, when an information recovery request is received from the user in the future, the user log management server 100 may simply recover the information by comparing the valid information and second user log information regarding a point in time of the recovery request.

That is, second user log information may be rapidly recovered using user log information before a point in time where hacking takes place, by extracting valid information, selected by the administrator, from entire log information about the user, that is, the first log information, and storing the extracted valid information in a type of snapshot database, and by comparing only the predetermined valid information and the user log information at a time of the recovery request, that is, the second user log information when the information recovery request is received from the user in the future.

In this instance, the snapshot database may indicate a collection of computer files and directories that once existed in the past and have been maintained in a computer file system. Also, the snapshot database may refer to an information storage unit that may store first log information corresponding to entire records with respect to a user in a game, and may extract valid information required for recovering the information to separately store and manage the valid information.

Accordingly, by the following process, the user may receive a recovery of hacked information using valid information stored in the user log management server 100.

The user may transmit recovery request information for the valid information to the user log management server 100, through an information transmitter 210 of the user terminal 200.

Then, an information receiver 140 of the user log management server 100 may receive the recovery request information for the valid information from the user terminal 200. The recovery request information may include contents regarding a point in time when the user terminal is hacked, a case of hacking damage, and the like, and the administrator may prepare for automatic recovery when the user terminal is determined to be hacked by verifying the point in time when the user terminal is hacked, and the case of hacking damage, which may be included in the recovery request information.

An information analysis unit 150 of the user log management server 100 may compare and analyze second user log information and the valid information at a point in time when the recovery request information is received based on the recovery request information.

An information recovery unit 160 of the user log management server 100 may recover the second user log information using the valid information, based on a result of the analysis.

That is, the information recovery unit 160 of the user log management server 100 may recover the second user log information using the valid information when the user terminal is determined to be hacked since the second user log information may be different from the valid information, as the result of the analysis of the information analysis unit 150.

For example, when an Internet Protocol (IP) address of the user terminal is identical to a predetermined IP address associated with hacking, the user log management server 100 may determine the user terminal to be hacked, and may recover the second user log information using the valid information.

That is, the user may receive the second user log information recovered using the valid information, stored in a type of snapshot database of the user log management server 100 before the recovery request information is transmitted, based on the determination of the user log management server 100, through the information recovery unit 120 of the user terminal 200.

A series of processes of recovering information according to embodiments of the present invention may be automatically executed based on settings information that may be set by the administrator and accordingly the information recovery may be performed rapidly.

The valid information stored in the snapshot database may be set to be automatically stored at a predetermined time by a setting made by the administrator, and the point in time when the user terminal is hacked and the case of hacking damage may be verified by the administrator based on the recovery request information that may be received when the user is affected by the hacking.

When the point in time when the user terminal is hacked is verified, the administrator may manage the system for recovering information using the snapshot database to automatically perform the information recovery with respect to a corresponding point in time. That is, the system for recovering information according to embodiments of the present invention may automatically recover the log information at the point in time of hacking, that is, the second user log information using the valid information stored in the snapshot database, based on a command for automatic information recovery from the administrator.

Also, according to embodiments of the present invention, the administrator may recover at least one piece of information selected from the valid information.

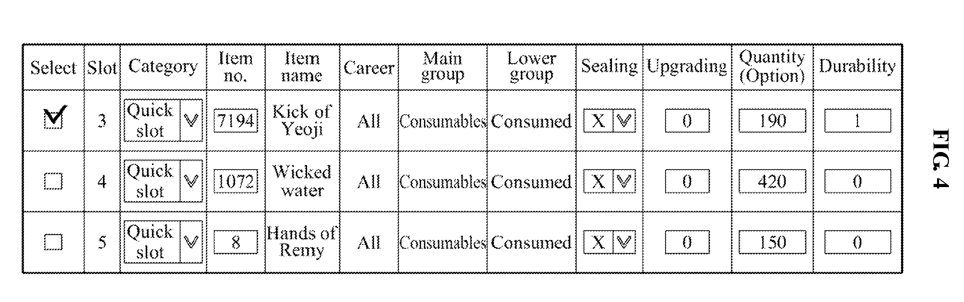

FIG. 4 is an example illustrating a process of recovering information according to embodiments of the present invention.

For example, an administrator may only select accurate information which may be determined to be hacked, from valid information stored in a type of snapshot database, and may recover the hacked information, as illustrated in FIG. 4.

Also, since the valid information may be classified and separately stored based on period information, the administrator may recover the hacked information using the valid information about a time period selected from the period information.

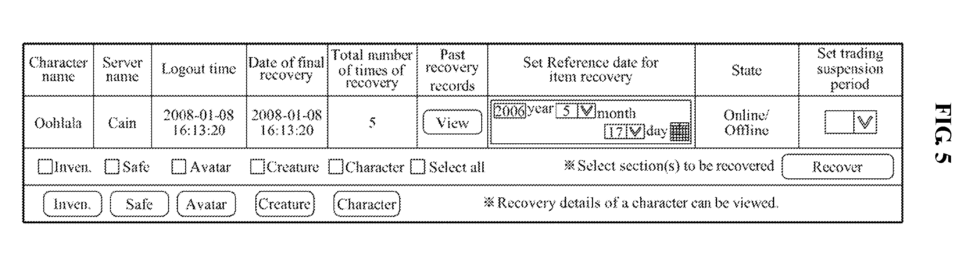

FIG. 5 is another example illustrating a process of recovering information according to embodiments of the present invention.

For example, the administrator may select a predetermined time period from the valid information classified based on the period information, and may recover information, as illustrated in FIG. 5.

Also, in addition to the information recovery, the present invention may also forbid a change with respect to user log information, for which recovery request may be received based on a request from the user, or the setting by the administrator.

That is, when the information analysis unit 150 determines a user terminal to be hacked, an information change suspension unit 170 of the user log management server 100 may forbid a change with respect to any one piece of second user log information during a time period corresponding to trading suspension period information.

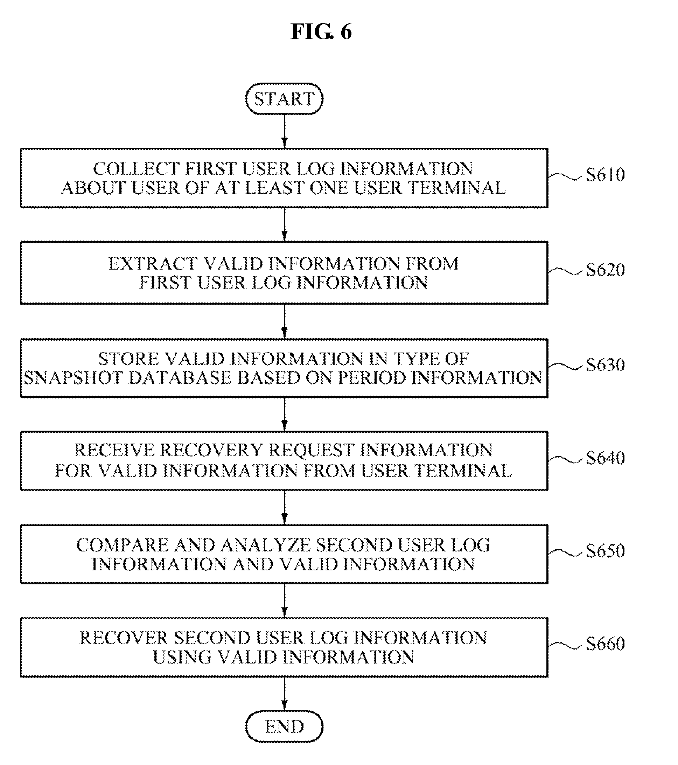

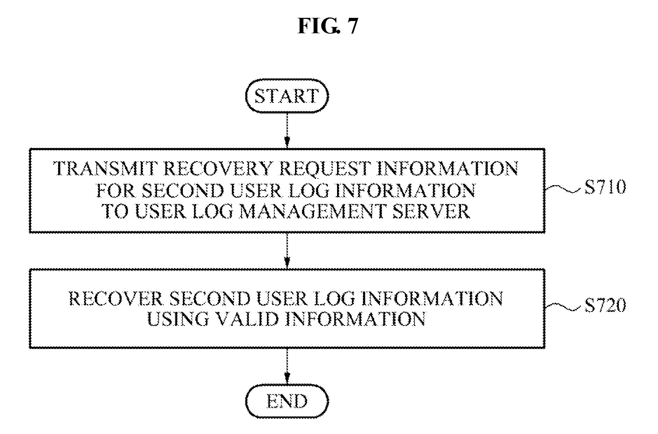

As aforementioned, the present invention discloses a method for recovering hacked information using valid information, extracted from user log information and stored in a type of snapshot database, and the method will be described in sequence with reference to FIGS. 6 and 7.

Here, since the method for recovering hacked information using valid information is based on a method for recovering information using the user log management server 100 and the user terminal 200, the method for recovering hacked information using valid information includes all of functional elements of the user log management server 100 and the user terminal 200. Accordingly, a detailed description will be omitted here.

The method of recovering hacked information will be described from a point of view of the user log management server 100 with reference to FIG. 6.

FIG. 6 is a flowchart illustrating a method of recovering information using a snapshot database according to embodiments of the present invention.

In operation S610, the information collector 110 may collect first user log information about a user of at least one user terminal 200, as illustrated in FIG. 6.

In operation S620, the information extraction unit 120 may extract valid information from the first user log information.

In operation S630, the information storage unit 130 may store the valid information in a type of snapshot database based on period information.

In operation S640, the information receiver 140 may receive recovery request information for the valid information, from the user terminal 200.

In operation S650, the information analysis 150 may compare and analyze second user log information and the valid information at a point in time when the recovery request information is received based on the recovery request information.

In operation S660, the information recovery unit 160 may recover the second user log information using the valid information based on a result of the analysis.

The method of recovering hacked information will be described from a point of view of the user terminal 200 with reference to FIG. 7.

FIG. 7 is a flowchart illustrating another method of recovering information using a snapshot database according to embodiments of the present invention.

In operation S710, the information transmitter 210 may transmit recovery request information for valid information to the user log management server 100.

In operation S720, the information recovery unit 220 may receive second user log information recovered using the valid information, stored in a type of snapshot database of the user log management server 100 before the recovery request information is transmitted, based on the determination of the user log management server 100.

In this instance, the user log management server 100 may recover the second user log information using the valid information, based on a result of comparing and analyzing the second user log information at the point in time when the recovery request information is received, and the valid information.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A method of recovering information using a snapshot database, the method comprising:
collecting first user log information about a user of at least one user terminal;
extracting valid information from the first user log information;
storing the valid information in a type of snapshot database, based on period information;
receiving recovery request information for the valid information from the user terminal;
comparing and analyzing second user log information and the valid information at a point in time when the recovery request information is received, based on the recovery request information; and
recovering the second user log information using the valid information, based on a result of the analysis.

2. The method of claim 1, wherein the recovery request information comprises at least one piece of information regarding a point in time when the user terminal is hacked, and information about a case of hacking damage.

3. The method of claim 1, wherein the recovering is executed when the user terminal is determined to be hacked since the second user log information is different from the valid information.

4. The method of claim 3, wherein the case where the user terminal is determined to be hacked corresponds to a case where an Internet Protocol (IP) address of the user terminal is identical to a predetermined IP address associated with hacking.

5. The method of claim 1, wherein each of the collecting, the extracting, the storing, the receiving, the comparing and analyzing, and the recovering is automatically executed according to setting information.

6. The method of claim 1, wherein, when the first user log information corresponds to information about a character history in a game, the valid information comprises at least one of a character name, inventory information, and financial information.

7. The method of claim 1, wherein the recovering comprises:
recovering the second user log information using at least one piece of information extracted from the valid information.

8. The method of claim 1, wherein the recovering comprises:
recovering the second user log information using the valid information about a time period extracted from the period information.

9. The method of claim 3, further comprising:
forbidding a change with respect to any one piece of the second user log information during a time period corresponding to trading suspension period information when the user terminal is determined to be hacked.

10. A method of recovering information using a snapshot database, the method comprising:
transmitting recovery request information for valid information to a user log management server; and
receiving second user log information recovered using the valid information, stored on the user log management server in a type of snapshot database before the recovery request information is transmitted,
wherein the user log management server compares and second user log information and the valid information at a point in time when the recovery request information is received, and recovers the second user log information using the valid information based on a result of the analysis.

11. The method of claim 10, wherein the user log management server performs:
collecting first user log information about a user of at least one user terminal;
extracting valid information from the first user log information; and
storing the valid information in a type of snapshot database, based on period information.

12. The method of claim 11, wherein the user log management server recovers the second user log information using the valid information when the user terminal is determined to be hacked since the second user log information is different from the valid information.

13. A non-transitory computer-readable medium comprising a program for instructing a computer to perform the method of any one of claim 1 to claim 12.

14. An apparatus for recovering information using a snapshot database, the apparatus comprising:
an information collector to collect first user log information about a user of at least one user terminal;
an information extraction unit to extract valid information from the first user log information;
an information receiver to receive recovery request information for the valid information from the user terminal;
an information analysis unit to compare and analyze second user log information and the valid information at a point in time when the recovery request information is received, based on the recovery request information; and
an information recovery unit to recover the second user log information using the valid information, based on a result of the analysis.

15. The apparatus of claim 14, wherein the information recovery unit recovers the second user log information using the valid information when the user terminal is determined to be hacked since the second user log information is different from the valid information, as the result of the analysis.

16. The apparatus of claim 15, further comprising:
an information change suspension unit to forbid a change with respect to any one piece of the second user log information during a time period corresponding to trading suspension period information when the user terminal is determined, by the information analysis unit, to be hacked.

17. An apparatus for recovering information using a snapshot database, the apparatus comprising:
an information transmitter to transmit recovery request information for valid information to a user log management server; and
an information recovery unit to receive second user log information recovered using the valid information, stored on the user log management server in a type of snapshot database before the recovery request information is transmitted, according to determination by the user log management server,
wherein the user log management server compares and analyzes second user log information and the valid information at a point in time when the recovery request information is received, and recovers the second user log information using the valid information based on a result of the analysis.

18. The apparatus of claim 17, wherein the user log management server recovers the second user log information using the valid information when the user terminal is determined to be hacked since the second user log information is different from the valid information.
